# EUROPEAN PATENT APPLICATION

(11) **EP 4 395 426 A1**
(43) Date of publication of application: **03.07.2024**
(21) Application number: 23164713.2
(22) Date of filing: 28.03.2023
(51) Int. Cl.: H04W 52/36, H04W 52/28, H04W 52/24, H04W 52/34, H04W 4/80, H04B 1/713

(54) **SYSTEMS, METHODS, AND DEVICES FOR POWER MANAGEMENT IN CHANNEL HOPPING SCHEME**

(30) Priority: 30.12.2022 IN 202241077317
(71) Applicant: INTEL Corporation, Santa Clara, CA 95054 (US)
(72) Inventor: CHAMBARAKATTA, Mahalingeshwara, KA 560037 Bangalore (IN); D´ANGELO, Wilfrid, 06 06250 Mougins (FR); ERIKSSON, Hakan Magnus, Portland, OR 97229 (US); HAGGAI, Oren, 4439211 Kefar Sava (IL); HUNDERT, Harel, Santa Clara, CA 95054 (US); RAZ, Ira, Santa Clara, CA 95054 (US); SHAUL, Adiel, Santa Clara, CA 95054 (US); SUTSKOVER, Ilan, M 3837610 Hadera (IL)
(74) Representative: Viering, Jentschura & Partner mbB Patent- und Rechtsanwälte

(57) **Abstract**

A wireless communication device including: a radio frequency (RF) circuitry; and one or more processors coupled to the RF circuitry and configured to: transmit up to and/or at a first regulatory transmit power limit and a second regulatory transmit power limit using a Bluetooth Low Energy (BLE) transmission protocol, wherein the first regulatory transmit power limit is greater than the second regulatory transmit power limit, wherein the one or more processors are configured to transmit at the first regulatory transmit power limit using an adaptive frequency hopping scheme if the one or more processors determine: the wireless communication device is located in a jurisdiction complying with European Telecommunications Standards Institute (ETSI) standard and a number of channels for transmission is equal or greater to a first threshold and wherein none of the channels available for transmission have a determined noise above a predefined noise threshold.

## Description

### Related Application(s)

This application claims priority to Indian Patent Application 202241077317, filed on 30 December 2022 the contents of which are incorporated by reference herein.

### Technical Field

Various aspects of this disclosure generally relate to the application of regulatory transmit power limits in a Bluetooth Low Energy channel hopping scheme.

### Background

Bluetooth Low Energy (LE) is not considered hopping by regulators, primarily because of the ability of LE devices to camp on 3 channels only (advertisement channels) for a very long time. Both the Federal Communications Commission (FCC) in the United States and the European Telecommunications Standards Institute (ETSI) in Europe define a minimum of used 15 channels for a system to be considered frequency hopping (e.g. operating according to a Frequency-hopping spread spectrum (FHSS) protocol).

While in the US, without frequency hopping it is still possible to transmit LE with a very high TX power, in Europe it is not so.

In Europe (ETSI EN 300 328, the 2.4GHz band spec), for a non-frequency hopping, a power spectral density limit of 10dBm/MHz effective radiated power (EIRP) is specified, rendering 1MHz transmitters like LE 1M limited to 10dBm EIRP transmit power and transmitters like LE 2M (and likely HDT, which is a next-generation LE modulations) to 13dBm EIRP; however, additional requirements are hard to comply with (medium utilization and transmission (TX) sequence/gap, Sections 4.3.2.5 and 4.3.2.4 respectively in EN 300 328) and they are exempt when TX power is limited by 10dBm EIRP.

Accordingly, all LE activity in Europe so far has been limited to a TX power of 10dBm EIRP for both 1MHz and 2MHz transmissions. Certification was done as Non-FHSS (frequency hopping) Non-Adaptive.

Although the regulations are more limiting, physical capabilities of current Bluetooth(c) devices can allow up to 18dBm EIRP (other devices could perhaps even go up to 20dBm which is a limit of Bluetooth(c) SIG), hence the existing regulatory limitations reduce the power beyond the device's capability. It is desired to be able to transmit as much as possible at maximum capability of the device.

### Brief Description of the Drawings

In the drawings, like reference characters generally refer to the same parts throughout the different views. The drawings are not necessarily to scale, emphasis instead generally being placed upon illustrating the principles of the disclosure. In the following description, various aspects of the disclosure are described with reference to the following drawings, in which:
FIG. **1** shows a Bluetooth Low Energy spectrum which includes 37 data channels and 3 primary advertising channels.
FIG. **2** shows a diagram of showing an example of advertising events for BLE.
FIG. **3** shows a diagram of showing an example of connection events for BLE.
FIG. **4** shows a diagram of showing an example of connection events with a subrate factor of 5 for BLE.
FIG. **5** shows a diagram of showing an example of CIS events and subevents for BLE.
FIG. **6** shows a diagram of showing an example of BIS events and subevents for BLE.
FIG. **7** shows a diagram showing a process of periodic advertising.
FIG. **8** shows a table showing ETSI FHSS adaptivity modes of operation.
FIGS. **9A** and **9B** show a flow diagram for target transmit power level selection and a flow diagram for ETSI-AFH according to various aspects of the present disclosure.
FIG. **10** shows a table showing BLE classification of channels including a mapping of PHY channels to physical channel index and channel type.
FIG. **11** shows an illustration of audio connection intervals in a wireless audio link
FIGS. **12** and **13** shows illustrations of BLE ACL connection intervals.
FIGS. **14** and **15** shows examples of power profiles stored in an OTP according to various aspects of the present disclosure.
FIG. **16** includes a table showing an example of summary of a proposed solution according to aspects of the present disclosure.
FIG. **17** shows an example of a transition map according to various aspects of the present disclosure.
FIG. **18** shows an example of protocol data unit (PDU) types.

### Description

The following detailed description refers to the accompanying drawings that show, by way of illustration, exemplary details and embodiments in which aspects of the present disclosure may be practiced.

The word "exemplary" is used herein to mean "serving as an example, instance, or illustration". Any embodiment or design described herein as "exemplary" is not necessarily to be construed as preferred or advantageous over other embodiments or designs.

Throughout the drawings, it should be noted that like reference numbers are used to depict the same or similar elements, features, and structures, unless otherwise noted.

The phrase "at least one" and "one or more" may be understood to include a numerical quantity greater than or equal to one (e.g., one, two, three, four, [...], etc.). The phrase "at least one of" with regard to a group of elements may be used herein to mean at least one element from the group consisting of the elements. For example, the phrase "at least one of" with regard to a group of elements may be used herein to mean a selection of: one of the listed elements, a plurality of one of the listed elements, a plurality of individual listed elements, or a plurality of a multiple of individual listed elements.

The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. For instance, the phrase "a plurality" may be understood to include a numerical quantity greater than or equal to two (e.g., two, three, four, five, [...], etc.).

The phrases "group (of)", "set (of)", "collection (of)", "series (of)", "sequence (of)", "grouping (of)", etc., in the description and in the claims, if any, refer to a quantity equal to or greater than one, i.e., one or more. The terms "proper subset", "reduced subset", and "lesser subset" refer to a subset of a set that is not equal to the set, illustratively, referring to a subset of a set that contains less elements than the set.

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term "data", however, is not limited to the aforementioned examples and may take various forms and represent any information as understood in the art.

The terms "processor" or "controller" as, for example, used herein may be understood as any kind of technological entity that allows handling of data. The data may be handled according to one or more specific functions executed by the processor or controller. Further, a processor or controller as used herein may be understood as any kind of circuit, e.g., any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

As used herein, "memory" is understood as a computer-readable medium (e.g., a non-transitory computer-readable medium) in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, 3D XPoint^{™}, among others, or any combination thereof. Registers, shift registers, processor registers, data buffers, among others, are also embraced herein by the term memory. The term "software" refers to any type of executable instruction, including firmware.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations.

Bluetooth Low Energy (BLE) was not considered hopping by regulators, primarily because of the ability of LE devices to camp on 3 channels only (advertisement channels) for a very long time. In Europe, the relevant ETSI standard requires at least 8 channels for non-adaptive mode and at least 15 channels for adaptive mode. Throughout this disclosure, the terms "adaptive mode" and "non-adaptive mode" are used. As stated above, adaptive mode requires a minimum of 15 useable, general purpose channels, while non-adaptive mode requires at least 8 usable, general purpose channels. As will be described herein, adaptive mode permits greater transmit power than non-adaptive mode. The term "adaptive mode" may refer to the adaptive mode as described in EN 300 328. In this manner, a device operating in adaptive mode will be able to adapt to its radio environment by identifying channels that are being used and by excluding these channels from its list of available channels. While in the US, without frequency hopping it is still possible to transmit LE with a very high TX power, in Europe it is not allowed.

In Europe (ETSI EN 300 328, the 2.4GHz band spec), for a non-frequency hopping a power spectral density limit of 10dBm/MHz EIRP is specified, rendering 1MHz transmitters like LE 1M limited to 10dBm EIRP and transmitters like LE 2M (and likely HDT) to 13dBm EIRP(note that in some configurations, and for a particular device and/or configuration, the antenna port power may serve as a proxy for the transmit power, and therefore by utilizing a known relationship between transmit power and antenna port power, it may be desired to control the overall transmit power by limiting the antenna port power; that notwithstanding, transmit powers are provided herein for convenience); however, additional requirements are hard to comply with (medium utilization and TX sequence/gap) and they are exempt when TX power is limited by 10dBm EIRP. Accordingly, so far, all LE activity in Europe has been limited to a TX power of 10dBm EIRP.

Higher TX power on non-advertising physical channels may be desirable for a variety of reasons. Such reasons may include a longer range in audio use cases. When using an audio connection, users may temporarily locate themselves distances from the transmitter/receiver (e.g. such as going to another room, answering a door, etc.), which may require higher transmit power to maintain a reliable connection. In current BLE usage, and as the distance between transmitting and receiving device increases, connections may fail and/or require reconnection.

Future modulations are expected to offer much worse RX sensitivity than BLE 1M, and therefore increased TX power for the future modulations may bring the distance achieved by the future modulations to be closer to the distance achievable by the BLE 1M modulation, the latter being typically used for advertisement and acknowledgements. As a non-limiting example, High Data Throughput (HDT), which is anticipated in Bluetooth 6.0, is expected to 8PSK modulations will at -85dBm, compared to BLE 1M at -100dBm)

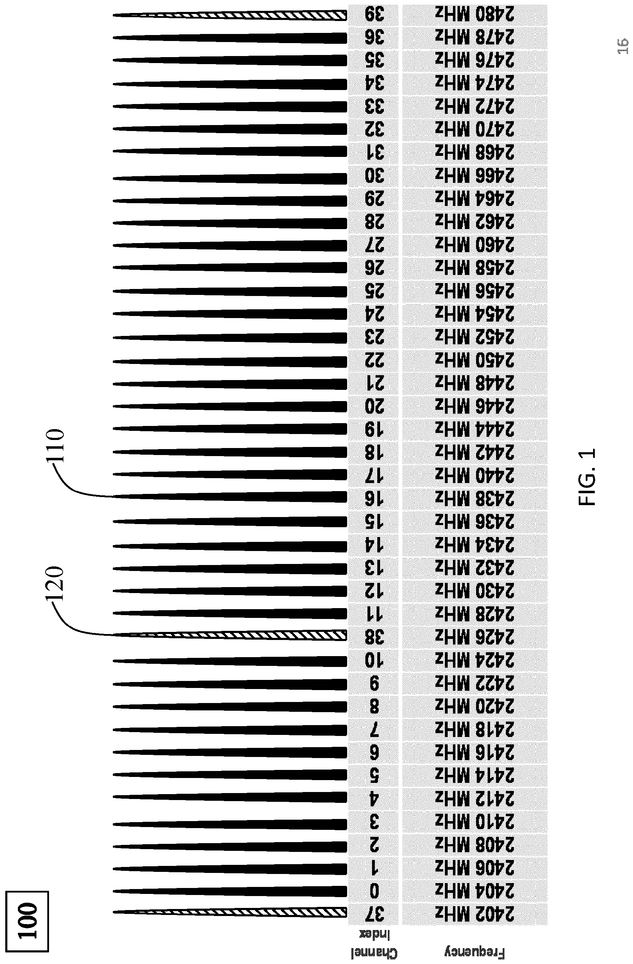

FIG. 1 below shows the low energy (LE) spectrum 100, highlighting the 37 data channels 110 and 3 primary advertising channels 120.

In BLE, 40 physical channels are defined in the 2.4 GHz ISM band. Three are known as primary advertising channels, used for initial advertising and all legacy advertising activities, and 37 are used as general purpose channels. The physical channel is sub-divided into time units known as events. Data is transmitted between LE devices in packets that are positioned in these **events.** The following types of events exist: Advertising, Extended Advertising, Periodic Advertising, Connection and Isochronous events.

The link layer supports both connected and connectionless communication. It supports both point-to-point communication (ACL, Isochronous Unicast Audio) between two devices and one-to-many communication from one device concurrently to an unlimited number of receiving devices (Isochronous Broadcast Audio).

Transmissions on the advertising physical channels occur in advertising events (AE, ADV).

The advertising physical channel changes on the next advertising packet sent by the advertiser in the same advertising event.

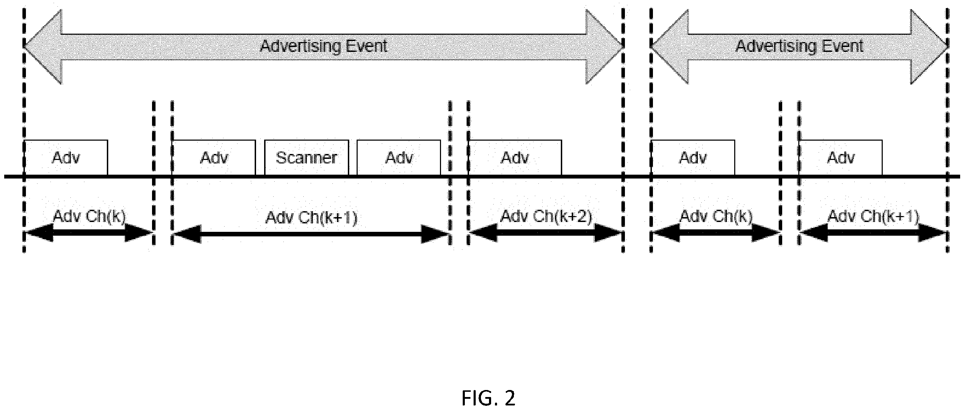

Devices that need to form an ACL connection to another device listen for connectable advertising packets. Such devices are referred to as initiators. If the advertiser is using a connectable advertising event, an initiator may make a connection request using the same advertising physical channel on which it received the connectable advertising packet (see FIG. 2 which shows advertising events).

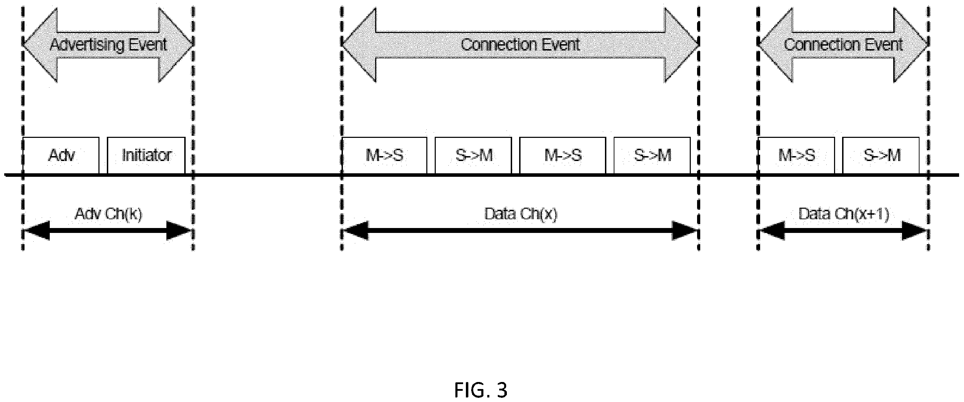

Once connected, the Central and Peripheral exchange data packets at regular intervals, called connection events (CE). Connection events are sent periodically until the connection is either terminated, or times out. In connection events, channel hopping occurs at the start of each connection event and a physical channel is selected by the channel selection algorithm. Within a connection event, the Central and Peripheral alternate sending data packets using the same data physical channel. The Central initiates the beginning of each connection event and can end each connection event at any time. FIG. 3 shows an example of connection events.

The subrate feature allows the Central and Peripheral to use a reduced number of connection events. The Central shall transmit and the Peripheral shall listen only on subrated connection.

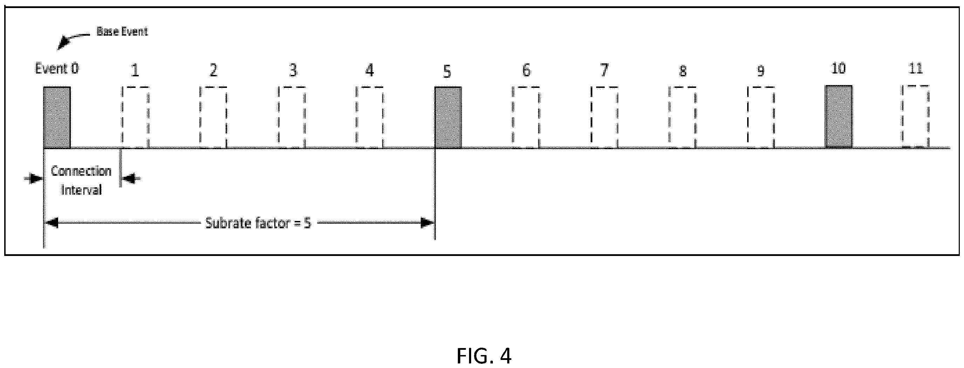

FIG. 4 shows how the subrate factor affects which events are subrated connection events. Note: CE interval length is not affected by subrate factor.

Using an ACL connection, a Central C can establish one or more isochronous connections that use the isochronous physical channel. An isochronous connection is used to transfer isochronous data between the Central C and a Peripheral P by using a logical transport, which is referred to as a Connected Isochronous Stream (CIS). A CIS consists of CIS events that occur at regular intervals (called ISO_Interval). Every CIS event consists of one or more CIS subevents. In each subevent, the Central C transmits once and the Peripheral P responds. Each subevent uses an isochronous physical channel which is selected by the channel selection algorithm.

A device can use an isochronous physical channel to broadcast isochronous data by using isochronous connectionless logical transports. An isochronous connectionless logical transport is referred to as a Broadcast Isochronous Stream (BIS). A BIS consists of BIS events that occur at regular intervals (called ISO_Interval).

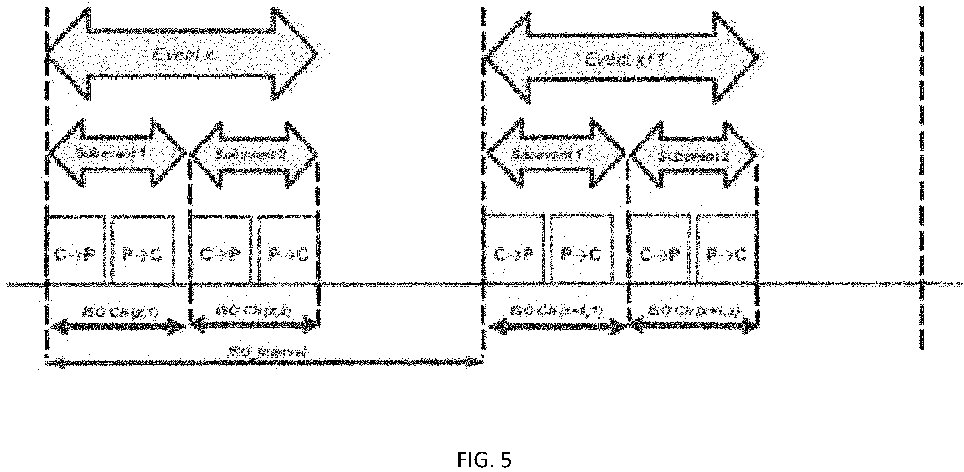

Every BIS event consists of one or more BIS subevents. In every subevent, a broadcasting device transmits an isochronous data packet. Each subevent uses an isochronous physical channel that is determined using the channel selection algorithm. Unidirectional communication only is supported by a BIS. FIG. 5 shows examples of CIS events and subevents.

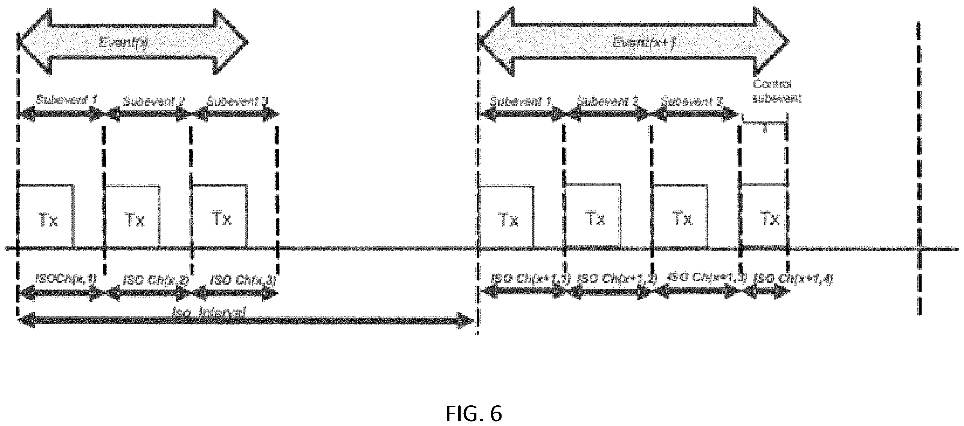

Periodic advertising allows a scanner (e.g. a device scanning for an advertisement) to sync with the advertiser/broadcaster so the scanner and advertiser would wake up at the same time. The advertiser/broadcaster then sends the advertisement packet, and the scanner turns on the receiver to get the advertisement packet. FIG. 6 shows an example of BIS events and subevents.

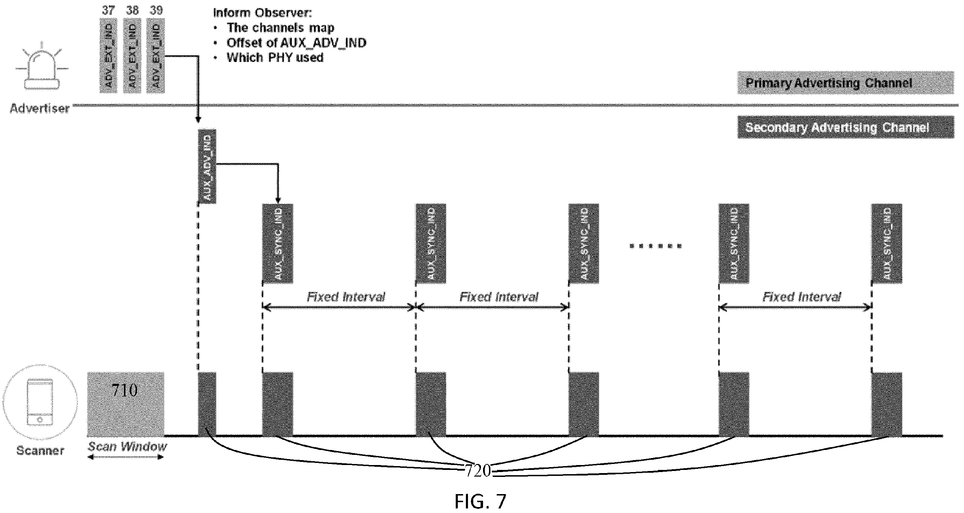

FIG. 7 outlines the whole process of periodic advertising, illustrating the introduction of secondary advertising channels. Three channels (37, 38, and 39) are used as primary advertising channels, and 37 general purpose channels are used as secondary advertising channels and data channels.

The area 710 in FIG. 7 illustrates advertisement over primary advertising channels, and the areas 720 shows advertisement over secondary advertising channels.

ADV_EXT_IND is over primary advertising channels. AUX_ADV_IND and AUX_SYNC_IND are over secondary channels. Here, AUX_ADV_IND is differentiated from AUX_SYNC_IND with respect to certification, and non-FHSS is used for the former while FHSS is used for the latter. One reason for this comes from the uniqueness of AUX_ADV_IND (single packet activity) that is not accurately called FHSS, since it has no more than a single packet, while hopping typically refers to transmission of a plurality of packets.

The device which wants to synchronize to any broadcast stream shall receive train of periodic advertising events and obtain synchronization information. This information may be obtained from the SyncInfo field of an AUX_ADV_IND PDU or from an LL_PERIODIC_SYNC_IND PDU sent by a connected device (PAST).

In BT Core specification 5.0 the Frequency hopping was improved with new channel selection algorithm called Channel Selection Algorithm #2 (CSA#2).

Channel Selection Algorithm #2 (CSA#2) is pseudo-random and more complex and harder to track algorithm for obtaining the channel index for the next connection event. It is more effective at avoiding interference and multi-path fading effects than Channel Selection Algorithm #1. It is also noted that CSA#2 is also more effective at reducing the interference that the transmitter causes in nearby devices.

Channel Selection Algorithm #2 can be used for channel selection in both connection-oriented communication and in periodic advertising. Channel Selection Algorithm #2 makes use of a shared event counter which enables all devices involved in the communication to determine the index of the next channel in the pseudo-random sequence.

Periodic advertising AUX_SYNC_IND PDUs may use the Channel Selection Algorithm #2

Each packet containing a BIS PDU may be transmitted on the channel index specified by Channel Selection Algorithm #2

Each packet containing a CIS PDU may be transmitted on the channel index specified by Channel Selection Algorithm #2

Channel Selection Algorithm #2 supports channel selection for connection events and for periodic advertising events and supports subevent channel selection.

At the start of an event, which can be a connection event, an isochronous event, or a periodic advertising packet, the CSA#2 generates an event channel index (GP channel index). If the event contains subevents, it also generates channel indices for each subevent. In a given event, each consecutive subevents using different channel indices.

During ACL connection establishment, if the initiator sent a CONNECT_IND PDU in response to an ADV_IND or ADV_DIRECT_IND PDU and either or both devices' PDU had the ChSel field set to 0, then Channel Selection Algorithm #1 shall be used on the connection. Otherwise, Channel Selection Algorithm #2 shall be used.

The device can transmit with up to 20dBm (EIRP) TX Power only in FHSS Adaptive mode (ETSI EN 300 328, the 2.4GHz band spec).

ETSI regulatory defines several requirements for FHSS adaptivity.

The first one is the Frequency Occupation requirement. A device using CSA#2 may comply with the Frequency Occupation requirement, while a device using CSA#1 does not comply with it. Ultimately, there are additional requirements to Frequency Occupation, like the number of hopping channels, which are not part of CSA1/2.

Channel Selection Algorithm #2 supports channel selection for connection events, for periodic advertising events and supports subevent channel selection.

Periodic advertising AUX_SYNC_IND PDUs, CIS and BIS PDUs may use the Channel Selection Algorithm #2.

ACL connection PDUs shall use CSA #1 or CSA #2, as selected during connection establishment.

Limitations on the dwell time may arise from, for example, Adaptivity (e.g., Section 4.3.1.7) and in particular from Adaptivity for devices relying on Detect-and-Avoid (DAA), Section 4.3.1.7.3.2. The relevant requirement in Section 4.3.1.7.3.2 states, "For equipment using a dwell time > 40 ms that wants to have other transmissions during the same hop (dwell time) an Idle Period (no transmissions) of minimum 5 % of the Channel Occupancy Period with a minimum of 100 µs shall be implemented." Thus, additional requirements for FHSS known as Adaptivity addresses the dwell time.

The longest dwell time on an LE CIS connection or for an LE BIS stream is the duration of one sub-event. Each sub-event is sent on a different RF channel selected by CSA #2.

An exemplary BLE device may currently transmit less than ~7ms (typically 1-2 packets) during a single dwell time period.

Periodic Advertising packets can include payload up to 255 bytes (currently -100 bytes) and sent at ~200ms intervals. Each Periodic Advertising event is sent on the RF channel selected by CSA #2.

The dwell time on an ACL connection cannot exceed the duration of the connection interval. The Connection interval can reach 4sec. Each ACL CE hops to the RF channel selected by CSA #1 or CSA #2. All packets of the same CE are sent on the same RF channel. Therefore, theoretically, the dwell time of ACL CE can be very long. In the current BT solution, the ACL connection interval is configured by MSFT to 60ms in standby mode and to 15ms in active mode and by Linux to 45ms.The BLE device uses an ACL connection for control and for HID s use cases (UC). A connection interval limitation can protect compliance with ETSI Adaptive mode dwell time for LE ACL connection.

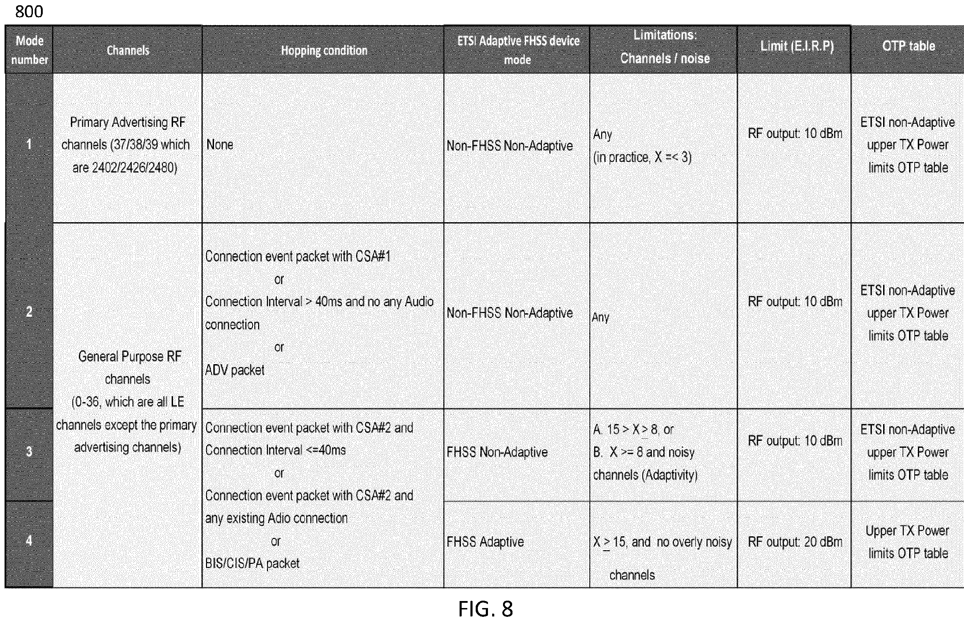

FIG. 8 includes a Table 800 showing the summary of Adaptive/non-Adaptive modes condition. Note: the TX power limits in Table 1 are presented in EIRP dBm units for a better understanding of ETSI requirement compliance. The actual TX power limits set in OTP are in Antenna port dBm units.

### Assumptions:

As described above with respect to adaptive mode and non-adaptive mode, the number of GP channels shall never be smaller than 8, otherwise link is disconnected.

The case 15 > x ≥ 8 is currently limited to 10dBm EIRP and may be optimized in the future to a higher value subject to regulatory requirements.

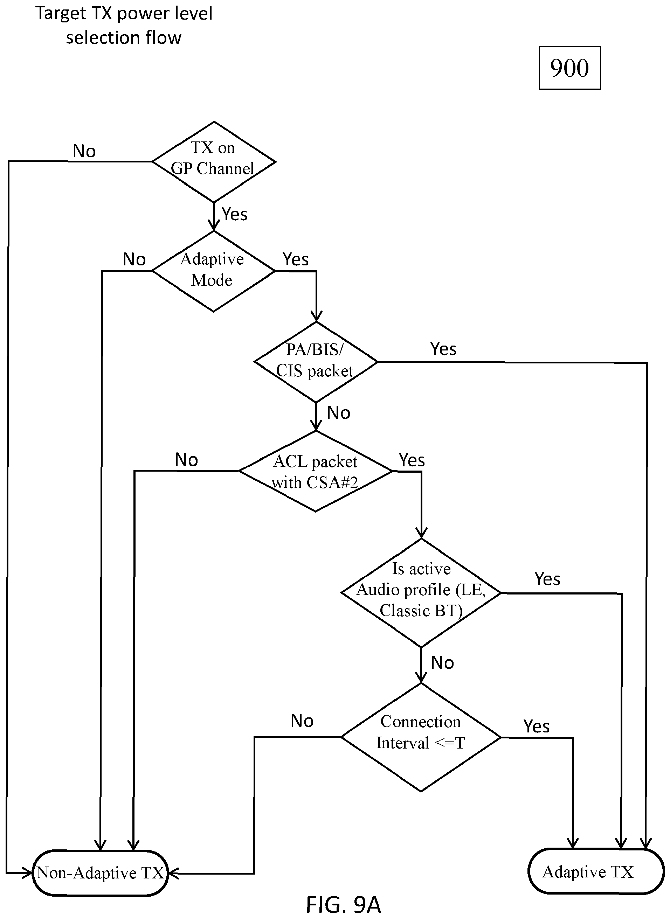

FIGS. 9A the target TX Power level detection flow 900. It should be noted that some of the branches of this figure could be reordered without loss of generality. For example, it is possible to question CSA2/1 before or after the questioning for an active audio. The particular order is generally intended to be demonstrative but not limiting.

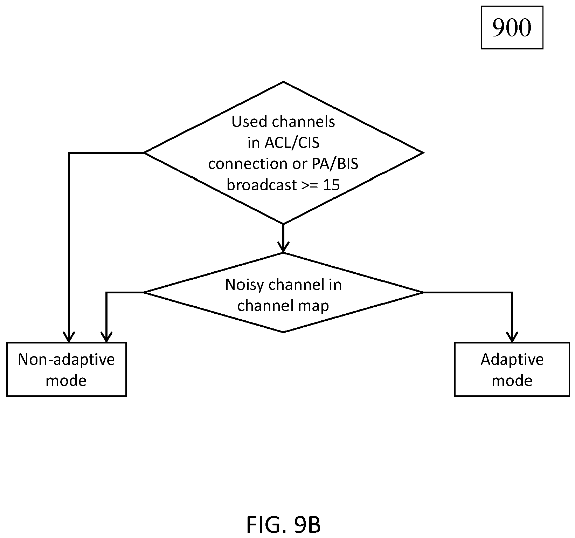

The decision flow is based on the Non-Adaptive or Adaptive mode selected by the ETSI-AFH algorithm 950 shown in FIG. 9B.

The ETSI AFH algorithm 950 is directed, at least in part, to the determination of Adaptive or Non-Adaptive mode. The general concept (for example, as it is currently used for Classic BT) is about moving to Non-Adaptive mode if one is forced to use channels that have a strong-enough noise (e.g., they experience Wi-Fi interference). In this case, however, the number of used channels in the channel map is also a consideration. That is, if the number of used channels goes below 15, one moves to Non-Adaptive mode. The ETSI AFH algorithm 950 is about determining Adaptive or Non-Adaptive mode. The general concept (for example as used today for Classic BT) may generally concern moving to Non-Adaptive mode if one is forced to use channels that have strong-enough noise in them (e.g., they experience Wi-Fi interference). However, the number of channels used in the channel map is also relevant-if the number of channels used goes below 15, non-adaptive mode is entered.

The solution separates BLE activities according to pre-defined parameters such that activities of the first kind can be certified as FHSS under ETSI and thus can benefit from a higher TX power regulatory limitation while activities of the second kind remain certified as non-FHSS under ETSI and they do not benefit from a higher TX power limit (they stay as is certified today). At any present time, a transmitter serves only one activity.

With the proposed solution, transmissions on general purpose channels will be able to reach 20dBm or more. This 10dB additional power (compared to the 10dBm limit on the advertisement channels) can increase the range by 100%, or more. Although the advertisement channels are not increased in power, the following are 3 use cases of benefit:

High modulations (especially such as expected by the new HDT modulations of BT6), which require high SNR, can be considered under the following lineup which shows that the audio connection is still weaker than the advertisement capability even when the TX power is as high as 18dBm (an example physical limitation); Table 2 shows that while data will be supported on links with path loss only up to 103dB attenuation, the conditions for advertisement do support links with a higher path loss (such as 1 10dB).

**Table 2**

| | Advertisement | LE-Audio (General purpose channels) |
|---|---|---|
| PC side | RX at -100dBm sensitivity | TX at 18dBm EIRP |
| Headset/Speakers/etc. (Ecosystem side) | TX at <=10dBm EIRP | RX at -85dBm sensitivity |
| Supported path loss | 10-(-100) = 110dB | 18 - (-85) = 103dB |

In some use cases, such as LE-based headset, the user experience is lenient toward re-connection at closer range. A user learns its maximal distance before disconnecting and when he is not familiar with it, he is willing to go back a few steps for reconnection. Moreover, first connection of headset is typically done at a very close range to the PC (e.g., while starting a Teams meeting).

Advertisement activity can be requested (supported by today's standard) to be done using a more robust modulation such as coded-LE (sensitivity toward -105dBm or even - 110dBm, depending on the modulation). While this is not customary today, it seems possible that ecosystem will change configuration to benefit from also connecting at a farther range (e.g., for non-mobile speakers).

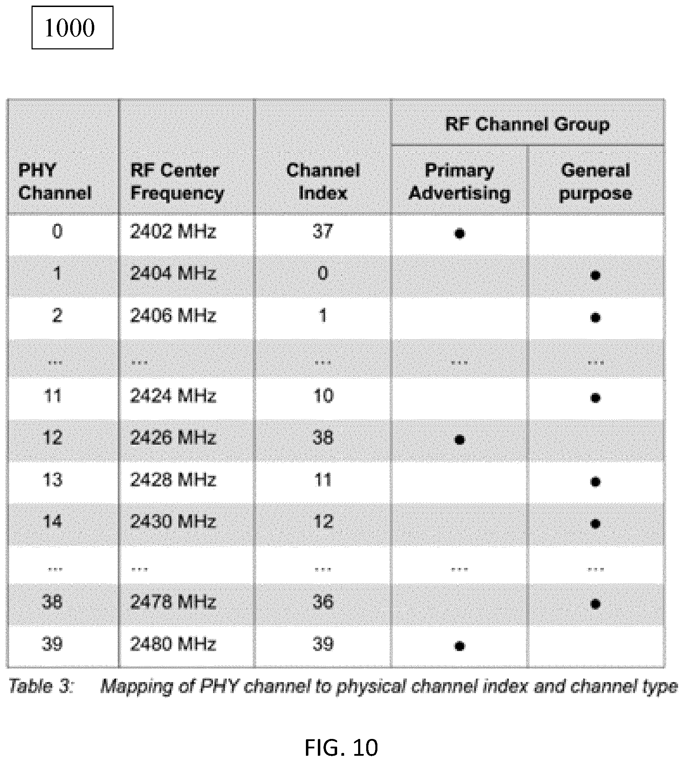

FIG. 10, taken from the Bluetooth standard, includes Table 1000 which shows the classification of channels into two non-overlapping groups.

The two sets of channels will be denoted herein as ADV channels (2402MHz, 2426MHz and 2480MHz) and GP channels (all of the other specified channels above).

In order to qualify as a FHSS system, a system must comply with several requirements. In the following, limitations imposed in (future) BLE systems are described in order to qualify as FHSS. The term Adaptive mode and Non-Adaptive mode is also used; the terminology is taken from ETSI spec (EN 300 328) and it refers to a device that ensures activity does not happen over too-noisy channels. In particular the device may move back and forth between Adaptive mode and Non-Adaptive mode, however devices will typically lower the TX power regulatory limit in Non-Adaptive mode compared to Adaptive mode (limit may stay intact if there is yet another independent limit that is more dominant).

The following limitations, shown in Table 4 below, are currently proposed for such systems:

**Table 4: Implementation according to ETSI requirements**

| ETSI Requirement | limitation on the BLE system |
|---|---|
| Certification can be either as FHSS or non-FHSS | Some activities are certified under the FHSS requirements and others under the non-FHSS requirements. |
| | The device identifies the activity type and classifies it properly. The device addresses the classification when it determines the TX power limit. |
| FHSS must have a minimum of 15 channels for an Adaptive FHSS | Adaptive mode can only be declared if the number of GP channels |
| system and 8 channels for a Non-Adaptive FHSS system. | employed are >=15. Otherwise, non-Adaptive mode is used. |
| | In case the number of GP channels drops below 15 but is >=8, non-Adaptive mode is used. |
| | In case the number of GP channels drops of a connection below 8, the link shall disconnect. |
| | For non-connection (BIS and PA), the number of channels shall always be >=8 (and as above, >=15 is a requirement for Adaptive mode). |
| Hopping sequence must be pseudo-random behavior. | Only activities configured to use CSA#2 (and not CSA#1, which is the only other alternative) may be FHSS. BIS and PA and CIS connections are always using CSA#2 according to Bluetooth(c) standard. |
| Dwell time shall be <=40ms or else Idle Periods must be added. | CIS, BIS and PA activities are very short, limited to hopping every ~7.5ms or similar. They employ a single packet that extends up to ~3ms. Accordingly, no special limitation is put on CIS/BIS/PA in order to comply with dwell time. |
| | LE ACL connections may be allowed to be considered FHSS if they are configured to have a connection interval lower than 40ms, or if the device has an active audio connection. The motivation is explained later. |
| Adaptivity - the device does not hop over channels determined to have noise above a certain threshold. | The device employs "ETSI AFH" mechanism which measures RSSI over the channels employed by the link. If an interference is determined to exist and the channel cannot be removed from the map, then the device shall move to Non-Adaptive mode and shall be limited by the Non-Adaptive TX power limits. |
| | When the device is aware that location is in ETSI or ETSI-following country, it shall apply the above. When the device is aware that location is not in ETSI or ETSI- |
| | following country, it shall apply appropriate limits, regardless of the above. |
| | When the device is unaware of its location, it shall assume Adaptive/Non-Adaptive classification is happening ETSI-like; when in Non-Adaptive mode it shall apply the ETSI Non-Adaptive TX power limitations (which are worst case = lowest TX power levels) and when in Adaptive mode it shall apply the minimum of the TX power limitations across all countries (as noted by "power profiles" in the device's OTP). |

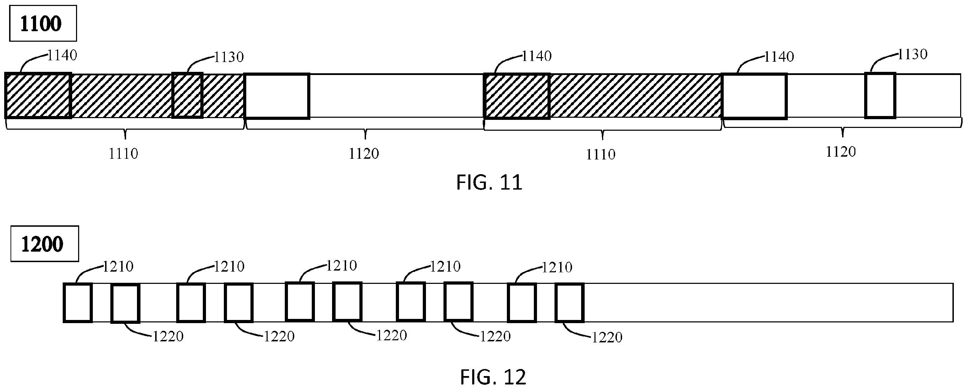

Regarding the connection interval and why it matters, consider the following diagram 1100 of FIG. 11, where the pattern filled 1110 and empty rectangles 1120 are all the same duration, known as the "connection interval". When an audio link is used, for guaranteeing quality of service, the device partitions the time into audio opportunities. For example, intervals of 7.5ms are very common today with HPF audio. Then, audio packets 1140 (rectangles possibly located at the beginning of each interval) are communicated within the beginning of every interval. If there is a re-transmission, it is also located inside that allocated audio opportunity.

Activities 1130 other than audio packets must be placed between the audio packets. These are shown in the rectangles. Unlike audio, their cadence does not need to be fixed.

The audio intervals are such that hopping is mandated (by the Bluetooth^{©} standard) among intervals. Accordingly, the dwell on a single frequency cannot extend longer than the connection interval.

In contrast, when no audio connection presides, an ACL link 1200 may have pairs of transmit packets 1210 and receive packets 1220 shown in the FIG. 12 for a duration that is as long as its own connection interval.

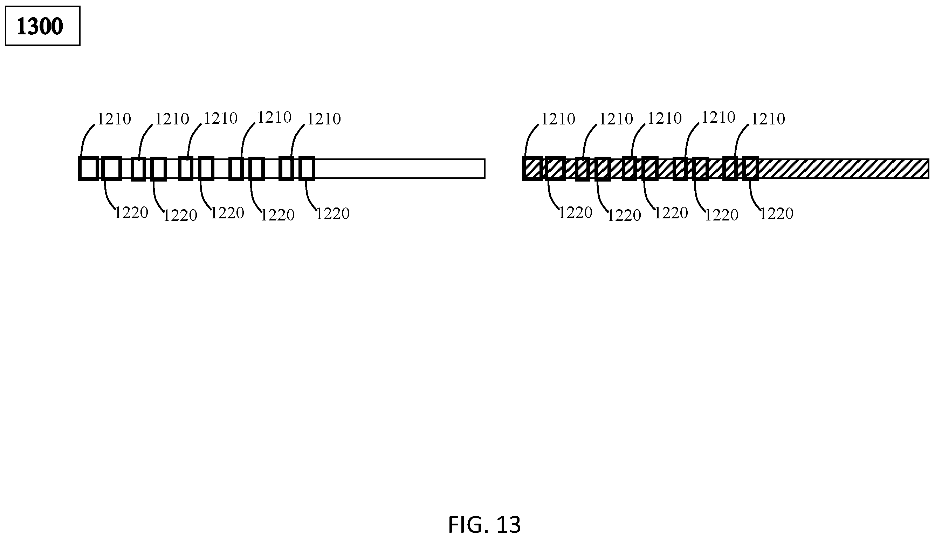

FIG. 13 below exemplifies that also such ACL connection intervals (1300) need not be back to back.

One option for complying with the 40ms dwell time, is to limit the connection interval time, which means that a connection configured to longer than the threshold (40ms) shall be active under the non-FHSS certification and a connection configured to 40ms or shorter may be active under the FHSS certification pending compliance with several other conditions described in the table above. This requirement of 40ms is not required when the audio connection is available, as then the dwell limitation is by the audio connection interval limitation which is relatively very short.

The pictures above are not drawn to scale.

To summarize, devices will be using the higher TX power limitation associated with Adaptive FHSS regulatory certification if the following conditions hold:
- The location is known to be ETSI-follower, or unknown (the latter case takes minimum of limits among the various power profiles).
- If the activity is BIS or Periodic Advertisement.
- If the activity is CIS.
- If the activity is LE ACL and the following also holds:
   - The connection is configured to use CSA#2 (meaning that both devices of the link support CSA#2 and requested to use this hopping sequence)
   - The connection is configured to use a connection interval under the threshold (40ms) or there is another active audio connection.
- The number of channels employed (by the LE ACL/CIS connections or the BIS/PA) is >=15.

The requirement to use the GP channels and not the ADV channels is trivially accomplished for all cases above.

It is worth noting that devices may be certified as a module, so that host configuration of the device cannot be guaranteed. Accordingly, the limitations may be placed in FW such that no regulatory violation may happen by whatever application that runs on the host.

FIG. 4 is taken from BT5.3 Vol.6 Part B, Section 4.5.1 and shows that a factor of activity is used on top of the connection interval. In other words, the cadence of activity is equal to the connection interval length times the subrate factor. When this is used, Windows^{©}, for example, may move away from a connection interval of 60ms into connection interval of 15ms with a sub-rate factor of 4. The content above, addressing the dwell time in a certain channel will still refer to the connection interval time and not to the product of it with the subrate factor, since each interval within that duration must still hop to another frequency.

The topic of "ETSI AFH" mentioned above addresses the device's response to the Adaptivity requirement of ETSI. Accordingly, for each channel map employed by a connection (note - a map may be employed by several connections) the noise received signal strength (RSSI) is monitored. If the device determines that a certain channel in the map is noisy it shall try to exclude it from the channel map. In Bluetooth standard, only the Central device controls the channel map and even the Central device may decide to keep sometimes a noisy channel (such may be the case if there are many noisy channels, for example when may WiFi access points are nearby). Therefore, if a noisy channel is kept in the map, the device shall move to Non-Adaptive mode and shall refrain from applying high TX power limits as long as this situation happens or more.

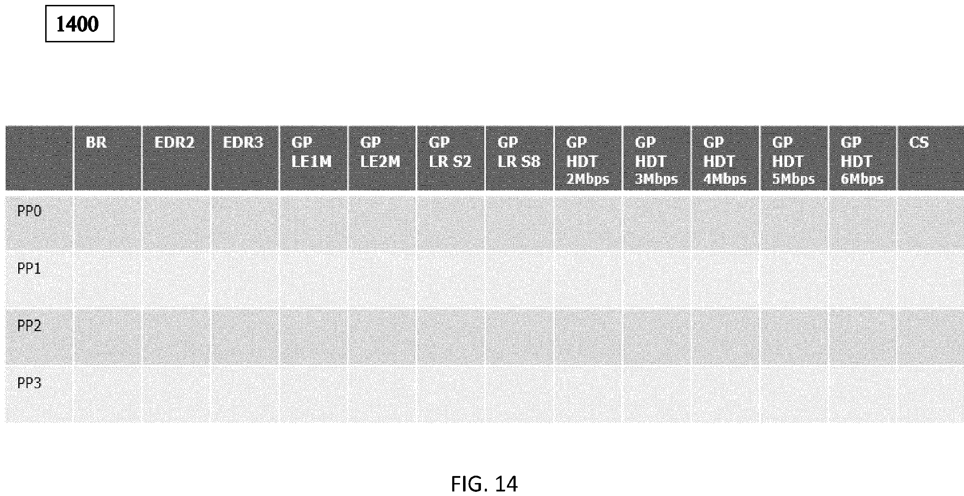

In order to support the above, it is proposed to set regulatory limits (which are maximum allowed transmit power) in an array such as array 1400 shown FIG. 14. In this structure, the regulatory limits for various modulations are described for LE (including HDT) transmissions, and similarly limits for Classic Bluetooth(c) modulations and other are described in the plural of columns of this table. The various rows may apply to various regulatory domains (such as Europe, US, etc.)

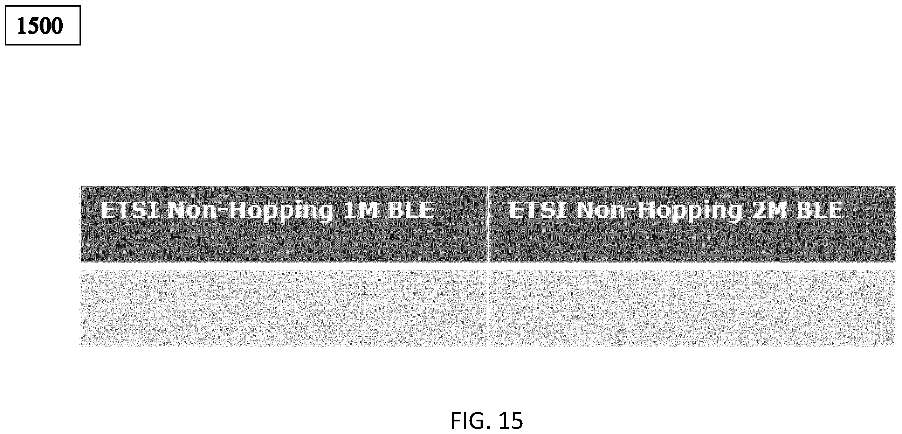

The ETSI Adaptive case shall use the regulatory limits addressed by the relevant rows in the table above. In contrast, the regulatory limits for Non-Adaptive and/or Non-FHSS are described independently as shown in array 1500 in FIG. 15.

When the location is unknown, It is expected that Adaptivity testing will continue. If mode is decided to be Non-Adaptive, values in FIG. 15 shall be used. Same if the activities cannot qualify as FHSS due to other reasons (e.g., a connection employing CSA#1). If the mode is decided to be Adaptive, then the needed limits are the minimum over all power profiles (addressing all possible countries), whereas ETSI values (as part of the minimization) are those pertaining to the Adaptive mode; in other words - all values are from the table in FIG. 15. The regulatory limits for the unknown location may either be specified explicitly as one of the power profiles (pre-calculated to hold the right values) or can be calculated by FW to be the minimum of all power profiles available in the OTP.

It is possible, of course, to extend the OTP table to double the size, one half pertaining to Adaptive FHSS mode and another half to Non-Adaptive/Non-FHSS mode. Indeed, the option provided by FIG. 14 and FIG. 15 is limited in a way that if lower transmit power for LE modulations is required and if that lower power differs modulation to modulation, then FIG. 15 flexibility is insufficient. However, it seems likely that FIG. 15 is indeed sufficient, and it is expected that both entries will point to the 10dBm/MHz limit or even to a 10dBmTX power limit.

With this OTP structure, the device is expected to assign TX power per packet based on the regulatory limit (among other parameters) associated with the activities mapped above (LE CIS/ACL/BIS/PA). If the hopping condition (e.g., a BIS, periodic advertisement, or CIS activity, or if the activity is LE ACL, then the connection is configured to use CSA#2; the connection is configured to use a connection interval under the threshold or there is another active audio connection) holds and the number of channels employed is >=15, the content of the FHSS Adaptive mode (FIG. 14) is used. Otherwise, FIG. 15 is used. The hopping condition may be considered a condition that allows one to certify as FHSS. When a device is operating in FHSS and the number of channels falls below 15, the device move to Non-Adaptive FHSS (and not Adaptive FHSS) - but the device is still FHSS.

The number of channels is mentioned after the hopping condition. Naturally, the content of FIG. 15 shall be used only when the location is known to be ETSI-related or the location is unknown. For example, it is possible that power profile #1 serves limits within the US (FCC), hence when location is known to follow FCC then the limits from FIG. 14 power profile #1 are used and Adaptivity testing is not required.

This disclosure may include any BLE system employing using a dedicated (high) TX power regulatory limitations for a connection that is either CIS or ACL, the latter subject to the connection interval limitation or is used in conjunction with an active audio link. Additionally, the connection may employ CSA#2 hopping algorithm and does not use over-noisy channels but uses at least 15 channels. This behavior may be limited to ETSI locations or unknown locations.

This disclosure may include any BLE system employing BIS packets and Periodic Advertisement packets over GP channels, using the (high) TX power regulatory limitations, while other non-connection flows are using the (low) TX power regulatory limitations. This behavior may be limited to ETSI locations or unknown locations.

This disclosure may include any non-volatile memory (OTP, EEPROM, platform NVM, etc.) that stores maximum TX power limitations separately for GP channels and for ADV channels.

This disclosure may include any device that approaches those limits also depending on location awareness (e.g., applying them when in Europe and applying only one of them when in USA).

This disclosure may include any device that maintains for each link a channel map such that when the channel map includes 15 channels or more it transmits with a higher TX power limitation and when it is less than 15 channels it transmits with a lower TX power limitation.

This disclosure may include any device that when acting as Central forces the device to use at least 15 channels.

This disclosure may include any device that when acting as a Peripheral disconnects from a link if the number of channels goes below 8, if location is unknown or is ETSI. In another implementation, the device disconnects regardless of location.

In the following slides, various aspects of the disclosure are described. It is expressly noted that certain portions of the following slides may apply to prior iterations of the channel hopping procedures described herein and are provided nevertheless for context.

Regulatory certification of LE today in Europe is non-FHSS since cannot guarantee enough channels, and is 1) Based on older Bluetooth 4, which is defined 3 advertising channels, and 2) Non-FHSS certification is limited by PSD of 10dbm/1Hz.

It is desired to transmit LE at higher than 10dBm/MHz: 1) LE audio can bootstrap all the way to connection (ACL/CIS) without resorting to PC and 2) Same is true for connecting to broadcast audio (broadcaster can instruct for connection peer devices through ACL connection).

Proposed Solution:
- Define 3 modes Adaptive FHSS, Non-Adaptive FHSS and Non-Adaptive Non-FHSS
   ∘ Adaptive FHSS allow the device to transmit up to 20dBm EIRP. The other modes are limited in power & PSD.
- The following condition (a.k.a. "hopping condition") defines activities that shall be classified as FHSS:
   ∘ It is on the General Purpose (GP) channels
   ∘ It employs Channel Selection Algorithm #2 (CSA#2)
   ∘ It is one of the following activities:
      ▪ ACL with connection interval below a threshold (*ConnIntTh*, currently targeting 40ms) while no Audio activity, or ACL while Audio activity is scheduled (ignoring the value of ConnIntTh)
      ▪ CIS or BIS packets
      ▪ Periodic Advertisement
   ∘ Any FHSS activity shall be in Non-Adaptive mode if the number of channels is less than 15 or it employs noisy channels above the Adaptivity threshold.
      ▪ The number of channels will always be 8 or more. In an operative case where less than 8 channels are requested, the link shall be disconnected.
      ▪ AFH is done independently for every connection, all broadcast (single map) and discovery (single map)
   ∘ All other cases shall be using the Non-Adaptive Non-FHSS certification.
      ▪ Examples: LE connections using CSA#1, ACL connections with connection interval above *ConnIntTH* [ms], various advertisement packets not being part of the periodic part of the periodic advertisement.

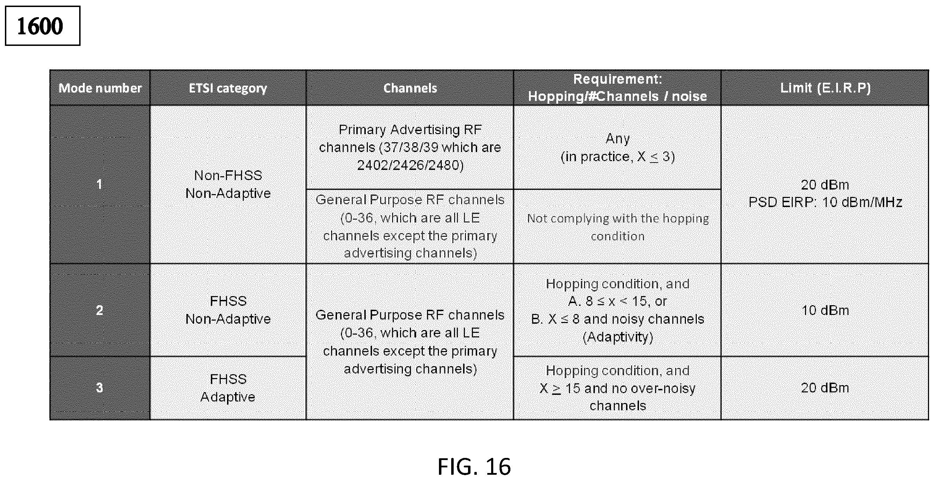

FIG. 16 includes a Table 1600 showing the summary of proposed solution. Assumptions: 1) The number of channels, X, shall never be smaller than 8, and 2) the case 8 ≤ X < 15 is currently limited to 10 dBm EIRP and may be increased in the future to a higher value subject to regulatory requirements.

Herein, GP = General Purpose RF channels and ADV = Primary Advertisement RF channels. The proposed solution relates to LE only and and in driver mode, ADV channels will always be limited in Europe.

Regarding AFH for Adaptive FHSS:
- Every connection (CIS/ACL) has its own AFH.
   ∘ Connection are only practicing GP CHANNELS.
   ∘ Per-connection channel map.
   ∘ Channel Sounding (HADM) uses same AFH, although regulatory certification is done independently for tones.
- Broadcast (BIS, periodic adv)
   ∘ Broadcast transmission are only practiced on GP channels
   ∘ Local assessment plus peripheral assessment impact (when exists)
   ∘ Single channel map for all broadcast receivers.
- Discovery (pre-connection for ACL)
   ∘ Discovery is done on ADV channels.
   ∘ Local assessment of noisy environment
   ∘ Unlikely to be practiced by PC use cases (PC typically scans) AFH may be implemented nevertheless (has also lab benefit)

### Transitions into Non-Adaptive and Back

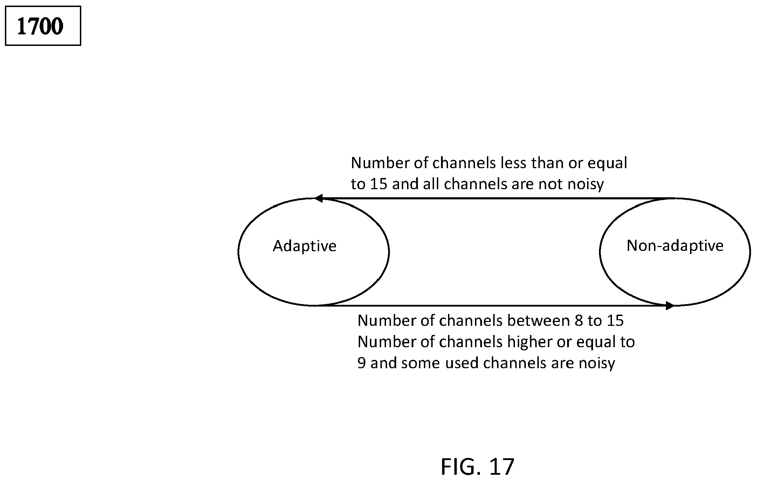

ETSI-AFH is transition to non-adaptive if the channel map includes after all some noisy channels. Additionally, transition to non-adaptive will be added based on insufficient number of channels. See FIG. 17 showing a transition map 1700.

### Channel Selection Algorithm for FHSS

BLE employs one of two channel selection algorithms (CSA). CSA#1 may be used by ACL connections. CSA#2 may be used by ACL connections and it also the only option for CIS (connected isochronous stream), BIS (broadcast isochronous stream) and periodic advertisement. The choice of algorithm for ACL connections depends on negotiation between the 2 devices when the connection is established or according to Feature Exchange link layer message.

The CSA employed by the stream is part of the hopping condition that defines eventually what kind of regulatory mode applies to the stream: Non-FHSS vs FHSS, mode-1 vs mode 2/3 respectively. The higher TX power can only be achieved for BLE connections employing CSA#2.

### Dwell Time

For LE ACL, dwell time cannot exceed a connection interval. Hopping to next channel shall be done no later than connection interval. Connection interval is set for a Central device by a host command and for a Peripheral device by a link-layer message. LE ACL links can be classifed based on connection interval. For links with connection interval less than or equal to *ConnIntTh,* use FHSS modes. For links with connection interval greater than *ConnIntTh,* use Non-FHSS modes, unless there is an active Audio connection. Active Audio connection forces a scheduler to assign hopping cadence according to Audio requirements (for all activities of an ACL connection) and is thus limiting ACL to opportunites between Audio times Dwell time in this case is longer than 15 ms per hop. *ConnIntTh* is a threshold which can be no longer than 40 ms. BLE5.3 introudces the concept of Connection Sub-Rating. Emloying subrate factor greater than 1 does not impact the dwell time.

For LE CIS and BIS, see BT5.3 Vol. 6 Part B, Section 4.5.13.1 - longest dwell is a subevent duration which is more or less 2 packet durations (1 TX and 1 RX below ~ 7ms).

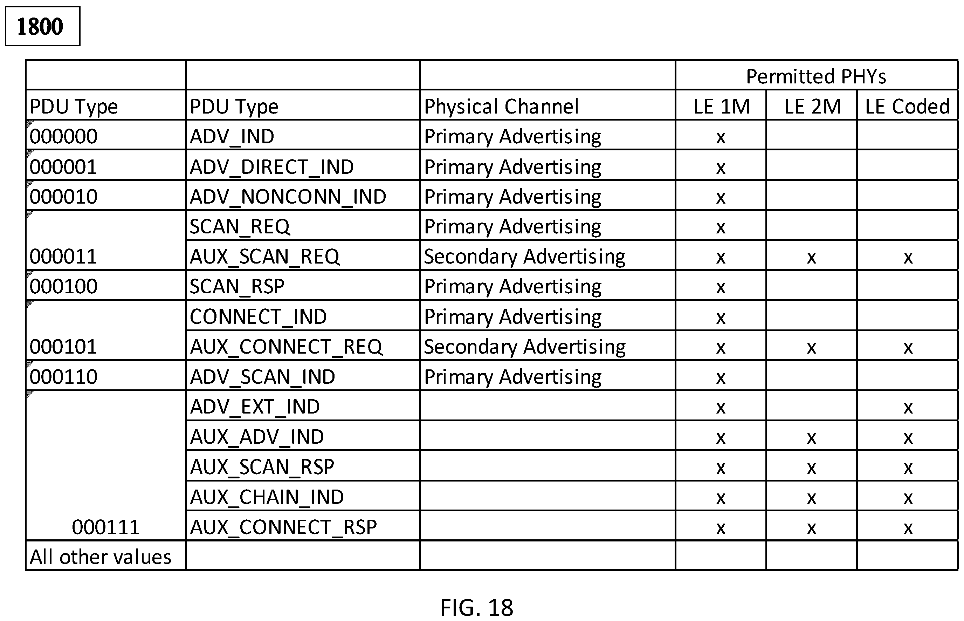

FIG. 18 shows a table 1800 of protocol data unit (PDU) types.

### ETSI standard

### Adaptive FHSS equipment

4.3.1.4.3.2 - Adaptive FFHSS equipment shall be capable of operating over a minimum of 70% of the band specified.

The Accumulated Transmit Time on any hopping frequency shall not be greater than 400 ms within any observation period of 400 ms multiplied by the minimum number of hopping frequencies (N) that have to be used. In order for the FHSS equipment to comply with the Frequency Occupation requirement, it shall meet either of the following two options:
Option 1: Each hopping frequency of the Hopping Sequence shall be occupied at least once within a period not exceeding four times the product of the dwell time and the number of hopping frequencies in use.
Option 2: The occupation probability for each frequency shall be between ((1/U) × 25%) and 77% where U is the number of hopping frequencies in use.

The Hopping Sequence(s) shall contain at least N hopping frequencies, where N is either 15 or the result of 15 MHz divided by the minimum Hopping Frequency Separation in MHZ, whichever is greater.

### Non-adaptive FHSS equipment

The Accumulated Transmit Time on any hopping frequency shall not be greater than 15 ms within any observation period of 15 ms multiplied by the minimum number of hopping frequencies (N) that have to be used.

In order for the FHSS equipment to comply with the Frequency Occupation requirement, it shall meet either of the following two options:
Option 1: Each hopping frequency of the Hopping Sequence shall be occupied at least once within a period not exceeding four times the product of the dwell time and the number of hopping frequencies in use.
Option 2: The probability that each frequency is occupied shall be between ((1/U) × 25%) and 77% where U is the number of hopping frequencies in use.

Starting with Bluetooth 5, LE has 37 general purpose channels to use as data channels and as extended advertising channels. LE Audio use cases make use of Bluetooth 5; extended advertising exclusively for advertising; with AFH to guarantee usage of at least 15 used channels. The legacy advertising over 3 primary advertising channels, are limited to initial discovery in LE Audio repeated in low duty cycle.

Re LE Audio Unicast and Broadcast, usage and duty cycle of legacy primary channels is minimized in LE Audio. 98% of Traffic is hopping on 37 channels, with AFH limit of at least 15 channels.

As previously mentioned, Bluetooth Low Energy (LE) is not considered hopping by regulators, primarily because of the ability of LE devices to camp on 3 channels only (advertisement channels) for a very long time. Both US (FC) and Europe (ETSI) define a minimum of used 15 channels for a system to be considered frequency hopping.

While in the US, without frequency hopping it is still possible transmit LE with very high TX power, in Europe it is not so.

IN Europe (ETSI EN 300 328, the 2.4GHz band spec), for a non-frequency hopping a power spectral density limit of 10dBm/MHz EIRP is specified, rendering 1 MHz transmitters like LE 1M limited to 10dBM EIRP (~7dBm antenna port) and transmitters like 2M (and likely HDT) to 13 dBm EIRP (~10 dBm antenna port); however additional requirements are hard to comply with (medium utilization and TX sequence/gap) and they are exempt when TX power is limited by 10dBm EIRP. Accordingly, in so far, all LE activity in Europe was limited to TX power of 10 dBM EIRP.

This disclosure presents separating the regulatory certification of LE in ETSI based on channels' sets. Activity in advertisement channels (2402, 2426, 2480 MHz) shall remain limited to 10 dBm EIRP and shall remain certified by Non-Adaptive Non-FHSS, while activity on the General Purpose channels (all the rest) shall be certified as FHSS, thus allowing (under some conditions) transmission with TX power as high as possible by BR (which is ~18dBm EIRP).

The motivation for higher TX power on non-advertisement channels includes:
- Future modulations (HDT) are expected to be much worse RX sensitivity than LE 1 M (e.g., 8PSK modulations will be at -85dBm, compared to LE 1M at -100 dBm).
- In some use cases (e.g., LE-based headsets), user experience allows re-connection at closer range than at farthest distance
- In the future it is possible to push ecosystem to performance some of advertisement on ADV channels using coded LE (whose sensitivity can be -105dBM for S2 or even -110dBm for S8)

This discloser presents separating the regulatory certification of LE in ETSI based on channels' sets. Activity in advertisement channels (2402, 2426, 2480 MHz) shall remain limited to 10 dBm EIRP and shall remain certified by Non-Adaptive Non-FHSS, while activity on the General Purpose channels (all the rest) shall be certified as FHSS, thus allowing (under some conditions) transmission with TX power as high as possible by BR (which is ~18dBm EIRP)

For LE AFH SAS, each link, including BIS, applies ETSI-AFH limitation. Typically, it means that each connection has its dedicated AFH. When acting as a peripheral device, if Central assigns a map with less than 8 channels, the device shall disconnect from that link.

For Regulatory SAS, OTP to hold TX power limits for hopping LE and for non-hopping LE. Limits are per modulation for hopping LE. Limits are per BW for non-hopping LE. TX power may also be limited due to Non-Adaptive mode in effect. Non-Adaptive mode TX powers is typically the correspond Non-Hopping LE TX power in OTP.

For TX power SAS, LC to assign TX power to BC activity per packet given also channel knowledge and MCC. In ETSI countries: Given channel knowledge and modulation knowledge, TX power limit is taken from OTP correct entry. In Non-ETSI following countries: TX power is taken from the GP channels per modulation regardless of channel.

ETSI requirements for FHSS Adaptive mode include: 1) Number of GP channels must be 15 or above, and No strong interferes above -50dBm-max_Tx_Power = ~65dBm. 2) Bad-to-Good time limit of 7.5 seconds (non-optimized, based on 5*37*40ms). Channel re-inclusion and TX power increase due to Non-Adaptive to Adaptive mode. Lower limit on the Classification-to-Classification time duration.

Every connection in which both conditions are satisfied can transmit at high TX power (toward 18dBm EIRP).

Every connection in which a strong interference is detected in channel that is retained in the channel map must move to Non-Adaptive mode, which means TX power is less than or equal to 10dBm EIRP. When a strong interferer is detected, it is possible to remove the channel from the channel map without resorting to Non-Adaptive mode.

Every connection in which the number of channels is less than 15 must move to Non-Adaptive which means the TX power is less than or equal to 10dBmEIRP.

LE Hopping implications include for XVT: Driver mode is limited in all cases as in operational driver. This means that some channels will be lower TX power than others even in HVT and MVT, including DRTU. PCAL mode and REG mode are not affected (GP channels dominate the maximum TX power limit). Expected TX power is reported given channel knowledge.

For LE Hopping, regulatory certification shall be assuming separation of TX power regulatory limits over GP channels and ADV channels.

A one-time programmable (OTP) for LE hopping has 4 power profiles (ETSI, FCC, Japan, and Unused-today). Each power profile can be structured as shown in FIGS. 15 and 16.

### Framework (FW) - TX Power

LC decides TX power target per packet given all criteria, including also per channel identity. LC decision may be invoked by scheduler or by a query call from BC. Some advertisement flows are calling LC from BC thread. Also, for CIS subevents, BC shall invoke a query to LC.

LC decision (possibly through TX power manager) is made based on: Upper limit from OTP (as captured to DDC at INIT's populate_nvm) that is location aware, TPC instructions; Any ordinary upper limits like SAR limitations; HCI instructions, PPAG updates; Non-Adaptive Mode signaling from AFH (which means TX power taken from Non-Hopping OTP entries based on BW.)

TX Power control exists only for connections (over GP channels). ADV channel's power is not affected by connections' TPC (fixed TX power).

In favor of xVT - FW reports TX power target when queried as appropriate for said channel and modulation.

The following may need to be captured by the AFH SAS for LE:
- Every connection (CIS/ACL) has its own AFH.
   ∘ Connections are only practicing GP Channels.
   ∘ Local assessment and peripheral assessment impact (when exists).
   ∘ Single channel map for all broadcast receivers.
- ETSI_AFH is part of any AFH above
   ∘ Limits: interference discerned above -65dBM and/or number of channels is below 15
   ∘ If conditions justify it, then relevant connection moves to Non-Adaptive mode which means TX power is limited for this connection to less than or equal to 10dBm
- Discovery over ADV channels may or may not apply AFH. ADV channels are exempt, regulatory-wise, as they are Non-FHSS Non-adaptive (hence under 10dBm EIRP)

While the above descriptions and connected figures may depict components as separate elements, skilled persons will appreciate the various possibilities to combine or integrate discrete elements into a single element. Such may include combining two or more circuits for form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc.

### EXAMPLES

Example 1 is a wireless communication device including: a memory, including: a first regulatory transmit power limit according to a transmission protocol; a second regulatory transmit power limit, less than the first regulatory transmit power limit, according to the transmission protocol; a processor, configured to: determine whether each of one or more channel management criteria are satisfied; if each of the one or more channel management criteria are satisfied, transmit at the first regulatory transmit power limit; and if fewer than each of the one or more channel management criteria are satisfied, transmit at the second regulatory transmit power limit.

Example 1 is the subject matter of Example 0, wherein optionally the first regulatory transmit power limit is for transmission in one or more first channels and the second regulatory transmit power limit is for transmission in one or more second channels, different from the one or more first channels.

Example 2 is the subject matter of Example 1, wherein optionally the one or more channel management criteria include a first channel hopping scheme among the one or more first channels and/or a second channel hopping scheme among the one or more second channels.

Exampe 3 is the subject matter of Example 2, wherein optionally the one or more channel management criteria include first channel hopping scheme hoppingbeing pseudo-random hopping.

Example 4 is the subject matter of any one of Examples 0 to 3, wherein optionally the transmission protocol is a Bluetooth Low Energy transmission protocol.

Example 5 is the subject matter of Example 4, wherein optionally the one or more first channels are general purpose channels.

Example 6 is the subject matter of Example 4 or 5, wherein optionally the one or more second channels are one or more advertisement channels.

Example 7 is the subject matter of any one of Examples 4 to 6, wherein optionally the one or more channel management criteria comprise use of Channel Selection Algorithm #2.

Example 8 is the subject matter of Exampe 7, which optionally further includes, if the wireless communication device is configured to use Channel Selection Algorithm #1, transmitting at the second regulatory transmit power limit.

Example 9 is the subject matter of any one of Examples 0 to 8, wherein optionally the one or more channel management criteria comprise a dwell time for remaining on a channel of the one or more first channels being less than or equal to 40 ms and/or wherein a dwell time for remaining on a channel of the one or more second channels being less than or equal to 40 ms.

Example 10 is the subject matter of any one of Examples 0 to 9, wherein optionally the one or more channel management criteria include a connection interval for transmitting on a channel of the one or more first channels being less than or equal to 40 ms and/or wherein a connection interval for transmitting on a channel of the one or more second channels being less than or equal to 40 ms.

Example 11 is the subject matter of any one of Example 0 to 10, wherein optionally the channel management criteria include determining a number of available channels of the one or more first channels; further comprising, if the number of available channels is greater than or equal to 15, transmitting at the first regulatory power limit; and if the number of available channels is greater than or equal to 8 but less than 15, transmitting at the second regulatory power limit.

Example 12 is the subject matter of Example 11, wherein optionally if the number of available channels is less than 8, disconnecting the wireless link.

Example 13 is the subject matter of any one of Examples 0 to 12, wherein optionally the processor is further configured to determine a location of the wireless communication device, and if the wireless communication device is in one or more first countries, operate according to the first operational mode.

Example 14 is the subject matter of any one of Examples 0 to 13, wherein optionally the processor is further configured to determine a location of the wireless communication device, and if the wireless communication device is in one or more second countries, operate according to the second operational mode.

Example 15 is the subject matter of any one of Examples 0 to 14, wherein optionally when a location of the wireless communication device is unknown, the processor is further configured to select as a maximum transmit power a lowest maximum regulatory transmit power among a plurality of jurisdictions.

Example 16 is the subject matter of Example 15, which optinally may further include a lookup table, configured to store a maximum regulatory transmit power of each of the plurality of jurisdictions, wherein selecting the maximum transmit power of the lowest maximum regulatory transmit powers among a plurality of jurisdictions comprises selecting a lowest maximum regulatory transmit power within the lookup table.

Example 17 is the subject matter of any one of Examples 0 to 16, wherein optionally the transmission protocol comprises transmission of a connected isochronous stream at the first regulatory transmit power limit.

Example 18 is the subject matter of any one of Examples 0 to 17, wherein optionally the transmission protocol comprises transmission of a broadcast isochronous stream at the first regulatory transmit power limit.

Example 19 is the subject matter of any one of Examples 0 to 18, wherein optionally the transmission protocol comprises transmission of a periodic advertisement at the first regulatory transmit power limit.

Example 20 is the subject matter of any one of Examples 0 to 19, wherein optionally the transmission protocol includes an Asynchronous Connection Less transmission.

Example 21 is the subject matter of Example 20, wherein optionally the processor is configured to transmit the Asynchronous Connection Less transmission at the first regulatory power threshold if the transmission comprises audio data.

Example 22 is the subject matter of Example 20 or 21, wherein optionally if the Asynchronous Connection Less transmission comprises no audio data, the processor is configured to transmit the Asynchronous Connection Less transmission at the first regulatory power threshold if a corresponding connection interval is within a range.

Example 23 is the subject matter of Example 22, wherein optionally if the Asynchronous Connection Less transmission comprises no audio data, and the corresponding connection interval is outside of the range, the processor is configured to transmit the Asynchronous Connection Less transmission at the second regulatory connection interval.

Example 24 is the subject matter of any one of Examples 0 to 23, wherein optionally the first regulatory transmit power limit and the second regulatory transmit power limit are regulatory power limited in accordance with the European Telecommunications Standards Institute.

Example 25 is the subject matter of any one of Examples 0 to 24, wherein optionally transmitting at the first regulatory power limit comprises transmitting at no more than the first regulatory power limit and wherein transmitting at the second regulatory power limit includes transmitting at no more than the second regulatory power limit.

Example 27 is a method including determining whether each of one or more channel management criteria are satisfied; if each of the one or more channel management criteria are satisfied, transmit at a first regulatory transmit power limit according to a transmission protocol; and if fewer than each of the one or more channel management criteria are satisfied, transmit at a second regulatory transmit power limit, less than the first regulatory transmit power limit, according to the transmission protocol.

Example 1 is the subject matter of Example 0, wherein optionally the first regulatory transmit power limit is for transmission in one or more first channels and the second regulatory transmit power limit is for transmission in one or more second channels, different from the one or more first channels.

Example 2 is the subject matter of Example 1, wherein optionally the one or more channel management criteria comprise a first channel hopping scheme among the one or more first channels and/or a second channel hopping scheme among the one or more second channels.

Example 3 is the subject matter of Example 2, wherein optionally the one or more channel management criteria comprise first channel hopping scheme being pseudo-random.

Example 4 is the subject matter of any one of Examples 0 to 3, wherein optionally the transmission protocol is a Bluetooth Low Energy transmission protocol.

Example 5 is the subject matter of Example 4, wherein optionally the one or more first channels are general purpose channels.

Example 6 is the subject matter of Example 4 or 5, wherein optionally the one or more second channels are one or more advertisement channels.

Example 7 is the subject matter of any one of Examples 4 to 6, wherein optionally the one or more channel management criteria include use of Channel Selection Algorithm #2.

Example 8 is the subject matter of Example 7, optionally further comprising, if the wireless communication device is configured to use Channel Selection Algorithm #1, transmitting at the second regulatory transmit power limit.

Example 9 is the subject matter of any one of Examples 0 to 8, wherein optionally the one or more channel management criteria comprise a dwell time for remaining on a channel of the one or more first channels being less than or equal to 40 ms and/or wherein a dwell time for remaining on a channel of the one or more second channels being less than or equal to 40 ms.

Example 10 is the subject matter of any one of Examples 0 to 9, wherein optionally the one or more channel management criteria comprise a connection interval for transmitting on a channel of the one or more first channels being less than or equal to 40 ms and/or wherein a connection interval for transmitting on a channel of the one or more second channels being less than or equal to 40 ms.

Example 11 is the subject matter of any one of Examples 0 to 10, wherein optionally the channel management criteria include determining a number of available channels of the one or more first channels; further including, if the number of available channels is greater than or equal to 15, transmitting at the first regulatory power limit; and if the number of available channels is greater than or equal to 8 but less than 15, transmitting at the second regulatory power limit.

Example 12 is the subject matter of Example 11, wherein optionally if the number of available channels is less than 8, disconnecting the wireless link.

Example 13 is the subject matter of any one of Examples 0 to 12, optionally further including determining a location of the wireless communication device, and if the wireless communication device is in one or more first countries, operating according to the first operational mode.

Example 14 is the subject matter of Example 13, wherein operating according to the first operational mode optionally includes transmitting at a predetermined power on both the one or more first channels and the one or more second channels.

Example 15 is the subject matter of any one of Examples 0 to 14, optionally further including determining a location of the wireless communication device, and if the wireless communication device is in one or more second countries, operating according to the second operational mode.

Example 16 is the subject matter of any one of Examples 0 to 15, which optionally may further include selecting as a maximum transmit power a lowest maximum regulatory transmit power among a plurality of jurisdictions, when a location of the wireless communication device is unknown.

Example 17 is the subject matter of Example 16, which may further include a lookup table, configured to store a maximum regulatory transmit power of each of the plurality of jurisdictions, wherein selecting the maximum transmit power of the lowest maximum regulatory transmit powers among a plurality of jurisdictions includes selecting a lowest maximum regulatory transmit power within the lookup table.

Example 18 is the subject matter of any one of Examples 0 to 17, wherein optionally the transmission protocol includes transmission of a connected isochronous stream at the first regulatory transmit power limit.

Example 19 is the subject matter of any one of Examples 0 to 18, wherein optionally the transmission protocol includes transmission of a broadcast isochronous stream at the first regulatory transmit power limit.

Example 20 is the subject matter of any one of Examples 0 to 19, wherein optionally the transmission protocol includes transmission of a periodic advertisement at the first regulatory transmit power limit.

Example 21 is the subject matter of any one of Examples 0 to 20, wherein optionally the transmission protocol includes an Asynchronous Connection Less transmission.

Example 22 is the subject matter of Example 21, which may further include transmitting the Asynchronous Connection Less transmission at the first regulatory power threshold if the transmission comprises audio data.

Example 23 is the subject matter of Example 21 or 22, which may further include transmitting the Asynchronous Connection Less transmission at the first regulatory power threshold if the Asynchronous Connection Less transmission comprises no audio data and if a corresponding connection interval is within a range.

Example 24 is the subject matter of Example 23, which may further include transmitting the Asynchronous Connection Less transmission at the second regulatory connection interval if the Asynchronous Connection Less transmission comprises no audio data, and the corresponding connection interval is outside of the range.

Example 25 is the subject matter of any one of Examples 0 to 24, wherein optionally the first regulatory transmit power limit and the second regulatory transmit power limit are regulatory power limited in accordance with the European Telecommunications Standards Institute.

Example 26 is a non-transitory computer readable medium, comprising instructions which, if executed, cause one or more processors to perform the method of any one of claims 0 to 25.

Example 1A is a wireless communication device including: a radio frequency (RF) interface and/or circuitry; and one or more processors coupled to the RF interface and/or circuitry and configured to: transmit up to and/or at a first regulatory transmit power limit and a second regulatory transmit power limit using a Bluetooth Low Energy (BLE) transmission protocol, wherein the first regulatory transmit power limit is greater than the second regulatory transmit power limit, wherein the one or more processors are configured to transmit at the first regulatory transmit power limit using an adaptive frequency hopping scheme if the one or more processors determine: the wireless communication device is located in a jurisdiction complying with European Telecommunications Standards Institute (ETSI) standard and a number of channels for transmission is equal or greater to a first threshold and wherein none of the channels available for transmission have a determined noise above a predefined noise threshold.

Example 2A is the subject matter of Example 1A, wherein optionally the first threshold is 15 channels or greater.

Example 3A is the subject matter of Example 1A or 2A, wherein optionally the one or more processors determined are configured to cause the wireless communication device to disconnect a BLE link if the one or more processors determine the number of channels for transmission is less than a second threshold.

Example 4A is the subject matter of Example 3A, wherein optionally the second threshold is 8 channels or less.

Example 5A is the subject matter of any of Examples 1A to 4A, wherein optionally the BLE transmission protocol is a Connected Isochronous Stream (CIS).

Example 6A is the subject matter of any of Examples 1A to 4A, wherein to transmit the first Bluetooth Low Energy (BLE) transmission protocol may be a Broadcast Isochronous Stream (BIS) or a Periodic Advertisement (PA).

Example 7A is the subject matter of Example 1A, wherein optionally the BLE transmission protocol is an Asynchronous Connection Less (ACL) transmission protocol.

Example 8A is the subject matter of Example 7A, wherein optionally the one or more processors are configured to transmit at the first regulatory power limit if the one or more processors determine a connection interval less than a connection interval threshold value.

Example 9A is the subject matter of Example 8A, wherein optionall ythe connection interval is 40 ms or less.

Example 10A is the subject matter of Example 7A, wherein optionally the one or more processors are configured to transmit as the first regulatory transmit power limit if there the wireless communication device has an active audio link.

Example 11A is the subject matter of any of Examples 1A-10A, wherein optionally the one or more processors are configured to transmit using a Channel Selection #2 Algorithm (CSA#2).

Example 12A is the subject matter of Example 6A, wherein optionally the one or more processors are configured to transmit at the first regulatory transmit power limit the over general purpose channels using BIS or PA protocol and further configured to transmit at the second regulatory transmit power limit for non-connection flows other a BIS or PA.

Example 13A is a wireless communication device including: a radio frequency (RF) interface; a non-volatile memory storing for maximum transmit power limits for Bluetooth and Bluetooth Low Energy (BLE) transmissions, wherein the maximum power limits are delimited according to modulation type, channel, jurisdiction, and one or more transmit modes; and one or more processors coupled to the RF interface and memory configured to: determine a location of the wireless communication device; and transmit up to or at the maximum transmit power limit over one or more of the plurality of channels using the maximum transit power stored memory according to jurisdiction of the wireless communication device and the modulation and one or more channels to be used.

Example 14A is the subject matter of Example 13A, wherein optionally the maximum transmit powers stored in memory includes a lookup table.

Example 15A is the subject matter of Example 13A or 14A, wherein optionally the one or more transmit modes includes an adaptive mode and a non-adaptive mode, and/or wherein the one or more transmit modes include a frequency hopping mode and a non-frequency hopping mode.

Example 1B is a non-transitory computer readable medium including instructions that when executed by one or more processors cause the one or more processors to: transmit up to and/or at a first regulatory transmit power limit and a second regulatory transmit power limit using a Bluetooth Low Energy (BLE) transmission protocol, wherein the first regulatory transmit power limit is greater than the second regulatory transmit power limit, wherein the one or more processors are cause to transmit at the first regulatory transmit power limit using an adaptive frequency hopping scheme if the one or more processors determine: the wireless communication device is located in a jurisdiction complying with European Telecommunications Standards Institute (ETSI) standard and a number of channels for transmission is equal or greater to a first threshold and wherein none of the channels available for transmission have a determined noise above a predefined noise threshold.

Example 2B is the subject matter of Example 1B, wherein optionally the first threshold is 15 channels or greater.

Example 3B is the subject matter of Example 1B or 2B, wherein optionally the one or more processors determined are configured to cause the wireless communication device to disconnect a BLE link if the one or more processors determine the number of channels for transmission is less than a second threshold.

Example 4B is the subject matter of Example 3B, wherein optionally the second threshold is 8 channels or less.

Example 5B is the subject matter of any of Examples 1B to 4B, wherein optionally the BLE transmission protocol is a Connected Isochronous Stream (CIS).

Example 6B is the subject matter of any of Examples 1B to 4B, wherein optionally to transmit the first Bluetooth Low Energy (BLE) transmission protocol is a Broadcast Isochronous Stream (BIS) or a Periodic Advertisement (PA).

Example 7B is the subject matter of Example 1B, wherein optionally the BLE transmission protocol is an Asynchronous Connection Less (ACL) transmission protocol.

Example 8B is the subject matter of Example 7B, wherein optionally the one or more processors are configured to transmit at the first regulatory power limit if the one or more processors determine a connection interval less than a connection interval threshold value.

Example 9B is the subject matter of Example 8B, wherein optionally the connection interval is 40 ms or less.

Example 10B is the subject matter of Example 7B, wherein optionally the instructions cause the one or more processors to transmit at the first regulatory transmit power limit if there the wireless communication device has an active audio link.

Example 11B is the subject matter of any of Examples 1B-10B, wherein optionally instructions cause the one or more processors to transmit using a Channel Selection #2 Algorithm (CSA#2).

Example 12B is the subject matter of Example 6B, wherein optionally the instructions cause the one or more processors are configured to transmit at the first regulatory transmit power limit the over general purpose channels using BIS or PA protocol and further configured to transmit at the second regulatory transmit power limit for non-connection flows other a BIS or PA.

Example 13B is a non-transitory computer readable medium including instructions that when executed by one or more processors cause the one or more processors to determine a location of a wireless communication device including the computer readable medium; and transmit up to or at a maximum transmit power limit over one or more of the plurality of channels using the maximum transit power read from a memory according to jurisdiction of the wireless communication device and the modulation and one or more channels to be used, wherein the memory is a non-volatile memory storing maximum transmit power limits for Bluetooth and Bluetooth Low Energy (BLE) transmissions with the maximum power limits being delimited according to modulation type, channel, jurisdiction, and one or more transmit modes.

Example 14B is the subject matter of Example 13B, wherein optionally the maximum transmit powers stored in memory include a lookup table.

Example 15B is the subject matter of Example 13B or 14B, wherein optionally the one or more transmit modes includes an adaptive mode and a non-adaptive mode, and/or wherein optionally the one or more transmit modes include a frequency hopping mode and a non-frequency hopping mode.

Example 1C is a method for wireless communication including: transmitting by a wireless communication device using a Bluetooth Low Energy (BLE) transmission protocol comprising transmitting at a first regulatory transmit power limit in response to determining: the wireless communication device is located in a jurisdiction complying with European Telecommunications Standards Institute (ETSI) standard, and a number of channels for transmission is equal or greater to a first threshold and wherein none of the channels available for transmission have a determined noise above a predefined noise threshold.

Example 2C is the subject matter of Example 1C, wherein optionally the first threshold is 15 channels or greater.

Example 3C is the subject matter of Example 1C or 2C, wherein optionally the one or more processors determined are configured to cause the wireless communication device to disconnect a BLE link if the one or more processors determine the number of channels for transmission is less than a second threshold.

Example 4C is the subject matter of Example 3C, wherein optionally the second threshold is 8 channels or less.

Example 5C is the subject matter of any of Examples 1C to 4C, wherein optionally the BLE transmission protocol is a Connected Isochronous Stream (CIS).

Example 6C is the subject matter of any of Examples 1C to 4C, wherein optionally to transmit the first Bluetooth Low Energy (BLE) transmission protocol is a Broadcast Isochronous Stream (BIS) or a Periodic Advertisement (PA).

Example 7C is the subject matter of Example 1C, wherein optionally the BLE transmission protocol is an Asynchronous Connection Less (ACL) transmission protocol.

Example 8C is the subject matter of Example 7C, wherein optionally transmitting at the first regulatory power limit further comprises transmitting at the first regulatory power limit in response to determining a connection interval less than a connection interval threshold value.

Example 9C is the subject matter of Example 8C, wherein optionally the connection interval is 40 ms or less.

Example 10C is the subject matter of Example 7C, wherein optionally the transmitting at the first regulatory power limit comprises transmitting the first regulatory transmit power limit in response to determining an active audio link.

Example 11C is the subject matter of any of Examples 1C-10C, wherein optionally the transmitting at the first regulatory power limit comprises transmitting using a Channel Selection #2 Algorithm (CSA#2).

Example 12C is the subject matter of Example 6C, wherein optionally the transmitting at the first regulatory power limit comprises transmitting at the first regulatory transmit power limit over general purpose channels using BIS or PA protocol, the method further including: transmitting at a second regulatory transmit power limit non-connection flows other than BIS or PA.

Example 13C is a method for wireless communication including: determining a location of the wireless communication device; and transmitting up to or at the maximum transmit power limit over one or more of the plurality of channels using the maximum transit power stored memory according to jurisdiction of the wireless communication device and the modulation and one or more channels to be used, wherein the memory is a non-volatile memory storing for maximum transmit power limits for Bluetooth and Bluetooth Low Energy (BLE) transmissions, wherein the maximum power limits are delimited in the memory according to modulation type, channel, jurisdiction, and one or more transmit modes.

Example 14C is the subject matter of Example 13C, wherein optionally the maximum transmit powers is stored in the memory as a lookup table.

Example 15C is the subject matter of Example 13C or 14C, wherein the one or more transmit modes includes an adaptive mode and a non-adaptive mode, and/or wherein the one or more transmit modes include a frequency hopping mode and a non-frequency hopping mode.

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method.

All acronyms defined in the above description additionally hold in all claims included herein.

## Claims

1. A non-transitory computer readable medium including instructions that when executed by one or more processors cause the one or more processors to:
transmit up to and/or at a first regulatory transmit power limit and a second regulatory transmit power limit using a Bluetooth Low Energy (BLE) transmission protocol, wherein the first regulatory transmit power limit is greater than the second regulatory transmit power limit, wherein the one or more processors are cause to transmit at the first regulatory transmit power limit using an adaptive frequency hopping scheme if the one or more processors determine:
the wireless communication device is located in a jurisdiction complying with European Telecommunications Standards Institute (ETSI) standard and
a number of channels for transmission is equal or greater to a first threshold and wherein none of the channels available for transmission have a determined noise above a predefined noise threshold.

2. The computer readable medium of claim 1,
wherein the first threshold is 15 channels or greater.

3. The computer readable medium of claim 1 or 2,
wherein the one or more processors determined are configured to cause the wireless communication device to disconnect a BLE link if the one or more processors determine the number of channels for transmission is less than a second threshold.

4. The computer readable medium of claim 3,
wherein the second threshold is 8 channels or less.

5. The computer readable medium of any of claims 1 to 4,
wherein the BLE transmission protocol is a Connected Isochronous Stream (CIS).

6. The computer readable medium of any of claims 1 to 4,
wherein to transmit the first Bluetooth Low Energy (BLE) transmission protocol is a Broadcast Isochronous Stream (BIS) or a Periodic Advertisement (PA).

7. The computer readable medium of claim 1,
wherein the BLE transmission protocol is an Asynchronous Connection Less (ACL) transmission protocol.

8. The computer readable medium of claim 7,
wherein the one or more processors are configured to transmit at the first regulatory power limit if the one or more processors determine a connection interval less than a connection interval threshold value.

9. The computer readable medium of claim 8,
wherein the connection interval is 40 ms or less.

10. The computer readable medium of claim 7,
wherein the instructions cause the one or more processors to transmit at the first regulatory transmit power limit if there the wireless communication device has an active audio link.

11. The computer readable medium of any of claims 1-10,
wherein instructions cause the one or more processors to transmit using a Channel Selection #2 Algorithm (CSA#2).

12. The computer readable medium of claim 6,
wherein the instructions cause the one or more processors are configured to transmit at the first regulatory transmit power limit the over general purpose channels using BIS or PA protocol and further configured to transmit at the second regulatory transmit power limit for non-connection flows other a BIS or PA.

13. A non-transitory computer readable medium including instructions that when executed by one or more processors cause the one or more processors to
determine a location of a wireless communication device including the computer readable medium; and
transmit up to or at a maximum transmit power limit over one or more of the plurality of channels using the maximum transit power read from a memory according to jurisdiction of the wireless communication device and the modulation and one or more channels to be used,
wherein the memory is a non-volatile memory storing maximum transmit power limits for Bluetooth and Bluetooth Low Energy (BLE) transmissions with the maximum power limits being delimited according to modulation type, channel, jurisdiction, and one or more transmit modes.

14. The compute readable medium of claim 13,
wherein the maximum transmit powers stored in memory comprises a lookup table.

15. The computer readable medium device of claim 13 or 14,
wherein the one or more transmit modes includes an adaptive mode and a non-adaptive mode, and/or
wherein the one or more transmit modes include a frequency hopping mode and a non-frequency hopping mode.
